# EUROPÄISCHE PATENTSCHRIFT

(11) **EP 3 956 639 B1**
(45) Veröffentlichungstag und Bekanntmachung des Hinweises auf die Patenterteilung: **01.11.2023**
(21) Anmeldenummer: 20716436.9
(22) Anmeldetag: 31.03.2020
(51) Int. Cl.: G01F 1/684, G01F 15/14, B21D 39/04, B21D 26/08, B21D 26/14

(54) **VERFAHREN ZUR HERSTELLUNG EINER SONDE EINES THERMISCHEN DURCHFLUSSMESSGERÄTS, SONDE EINES THERMISCHEN DURCHFLUSSMESSGERÄTS UND THERMISCHES DURCHFLUSSMESSGERÄT**
METHOD FOR PRODUCING A PROBE OF A THERMAL FLOWMETER, PROBE OF A THERMAL FLOWMETER, AND THERMAL FLOWMETER
PROCÉDÉ DE FABRICATION D'UNE SONDE D'UN DÉBITMÈTRE THERMIQUE, SONDE D'UN DÉBITMÈTRE THERMIQUE ET DÉBITMÈTRE THERMIQUE

(30) Priorität: 18.04.2019 DE 102019110312
(43) Veröffentlichungstag der Anmeldung: 23.02.2022
(73) Patentinhaber: Endress+Hauser Flowtec AG, 4153 Reinach (BL) (CH)
(72) Erfinder: BADARLIS, Anastasios, 4127 Birsfelden (CH); GABERTHÜEL, Stephan, 4104 Oberwil (CH); GRÜN, Alexander, 79539 Lörrach (DE); SCHULTHEIS, Hanno, 3274 Hermrigen (CH); BAUR, Tobias, 4145 Reinach (CH); BARTH, Martin, 4125 Riehen (CH); ARNOLD, Martin, 4153 Reinach (CH); HABERT, Mathieu, 68170 Rixheim (FR)
(74) Vertreter: Peguiron, Anke
(86) Internationale Anmeldenummer: PCT/EP2020/059058
(87) Internationale Veröffentlichungsnummer: WO 2020/212130

(56) Entgegenhaltungen:
- DE-B3-102016 121 111
- US-A- 3 674 586
- US-A- 5 880 365
- US-A1- 2011 041 597
- "Das Explosionsformen in der Luftfahrtindustrie", VDI ZEITSCHRIFT,, vol. 104, no. 24, 21 August 1962 (1962-08-21), pages 1243-1244, XP001336246,

## Beschreibung

Die Erfindung betrifft ein Verfahren zur Herstellung einer Sonde eines thermischen Durchflussmessgeräts zur Messung des Massedurchflusses eines Mediums in einem Messrohr, eine solche Sonde und ein thermisches Durchflussmessgerät mit einer solchen Sonde.

Ein typisches thermisches Durchflussmessgerät weist Sonden auf, welche in ein Messrohr solcher Durchflussmessgeräte hineinragen und im Betrieb von einem Medium umströmt werden. Üblicherweise ist mindestens eine Sonde zum Erfassen einer Medientemperatur und mindestens eine Sonde zum Heizen des Mediums eingerichtet. Beispielsweise kann aus einem Heizstrom, welcher zur Aufrechterhaltung einer Temperaturdifferenz zwischen Heizsonde und Temperaturerfassungssonde auf einen Massedurchfluss rückgeschlossen werden.

Um eine Temperaturänderung des Mediums oder eine Durchflussänderung schnell erfassen zu können, ist eine geringe thermische Masse der Sonde sowie ein guter thermischer Übergang zwischen Sonde und Medium wichtig.

US 5,880,365 A offenbart die Herstellung eines Sensors für ein thermisches Durchflussmessgerät, wobei ein Verfahren der hydroplastischen Verformung verwendet wird, um ein Sensorgehäuse auf einem Sensorkern plastisch zu verformen, wobei ein kleiner Luftspalt zwischen dem Sensorgehäuse und dem Sensorkern erhalten bleibt.

Die DE102016121110A1 schlägt vor, eine Sonde mittels Aufschmelzen von Silber in einer Hülse herzustellen. Auf diese Art und Weise kann prinzipiell ein guter thermischer Übergang zwischen Sonde und Medium bereitgestellt werden, jedoch ist das Verfahren anfällig für die Ausbildung von Blasen in der Silberschmelze, so dass Sonden häufig nicht verwendbar sind. Dies führt zu einem unerwünschten Ausschuss, welcher mittels Tests der Sonden gefunden werden muss und verursacht hohe Kosten.

Aufgabe der Erfindung ist es daher, ein besseres Verfahren mit geringerem Ausschuss, durch ein besseres Verfahren hergestellte Sonden und ein thermisches Durchflussmessgerät mit solchen Sonden vorzuschlagen.

Die Aufgabe wird gelöst durch ein Verfahren gemäß dem unabhängigen Anspruch 1, durch eine Sonde gemäß dem unabhängigen Anspruch 9 und durch ein thermisches Durchflussmessgerät gemäß dem unabhängigen Anspruch 13.

Bei einem erfindungsgemäßen Verfahren zur Herstellung einer Sonde für ein thermisches Durchflussmessgerät zur Messung des Massedurchflusses eines Mediums in einem Messrohr wird eine Sondenhülse mit einer Längsachse und ein in der Sondenhülse lose angeordneter Sondenkern bereitgestellt,
wobei in mindestens einem ersten Verfahrensschritt mittels Hochenergieumformung die Sondenhülse bezüglich der Längsachse vollumfänglich radial in Richtung des Sondenkerns verformt wird, und somit eine Stange gefertigt wird,
wobei die Stange einen Basiskörper darstellt, oder wobei ein Basiskörper von der Stange abgetrennt wird, wobei der Basiskörper zur Sondenfertigung herangezogen wird,
wobei eine radiale Verformungsgeschwindigkeit Werte größer als 100 m/s und insbesondere größer als 200 m/s erreicht, wobei die Hochenergieumformung mittels Explosionsumformung durch Platzieren von Sprengstoff auf einer Außenseite der Sondenhülse oder einer Magnetumformung bewerkstelligt wird, wobei eine stoffschlüssige Verbindung zwischen Sondenhülse und Sondenkern entsteht.

Ein Abstand zwischen einer Außenwandung des Sondenkerns und einer Innenwandung der Sondenhülse vor Anwendung der Hochenergieumformung sollte dabei idealerweise nicht größer als 0.5 mm sein, so dass eine Spielpassung vorliegt.

Die Explosionsumformung ist dabei von der Technik Sprengplattierung abgeleitet, wobei die Sondenhülse von einem Sprengstoff umgeben wird, welcher eine ausreichend hohe Detonationsgeschwindigkeit aufweist. Nach Zündung des Sprengstoffs findet bei Aufprall einer Hülsenwandung auf den Sondenkern eine stoffschlüssige und somit mechanisch stabile Verbindung statt, womit auch ein guter thermischer Übergang zwischen Sondenkern und Sondenhülse sichergestellt ist.

Bei der Magnetumformung wird ausgenutzt, dass zeitlich veränderliche Magnetfelder Wirbelströme in leitfähigen Materialien induzieren, welche ihrerseits eine Kraft auf das Material bewirken, welche Kraft radial inwärts gerichtet ist. Bei starken Magnetfeldern und schnellen zeitlichen Änderungen kann somit bei hülsenförmigen leitfähigen Gegenständen eine schnelle Verformung ausgelöst werden.

In einer Ausgestaltung wird der Basiskörper in einem weiteren Verfahrensschritt einem Zugverfahren unterworfen, mittels welchem eine Verringerung eines Außendurchmessers des Basiskörpers und eine Glättung einer Mantelfläche des Basiskörpers erreicht wird.

Beispielsweise wird der Basiskörper durch eine Öffnung in einem Werkzeug gezogen, welche Öffnung einen geringfügig kleineren Durchmesser als der Außendurchmesser des Basiskörpers aufweist. Auf diese Weise kann eine Mantelfläche des Basiskörpers geglättet werden. Auf diese Art und Weise kann auch der Außendurchmesser des Basiskörpers auf eine Sollgröße gebracht werden, dafür können mehrere Zugvorgänge mit nacheinander kleiner werdenden Öffnungen nötig sein.

In einer Ausgestaltung wird in einem weiteren Verfahrensschritt ein erstes Ende des Basiskörpers mediendicht verschlossen,
wobei das Verschließen des ersten Endes ein Entfernen des Sondenkerns in einem Endbereich umfasst, wobei ein Sondenkopf in den Endbereich eingeführt und an der Sondenhülse insbesondere durch Laserschweißen befestigt wird,
wobei eine Außenseite des Sondenkopfs insbesondere eine abgerundete Form wie beispielsweise eine Halbkugel- oder Halbellipsoidform aufweist.

In einer Ausgestaltung wird in einem weiteren Verfahrensschritt der Sondenkern auf einer einem zweiten Ende des Basiskörpers zugewandten Seite abschnittsweise zumindest teilweise freigelegt,
wobei am Sondenkern eine Kontaktfläche zum Anbringen eines Thermoelements an den Sondenkern herausgearbeitet wird,
wobei die Kontaktfläche einen Innenwinkel zur Längsachse aufweist, welcher Innenwinkel kleiner als 30 Grad, und insbesondere kleiner als 20 Grad und bevorzugt kleiner als 10 Grad ist.

Das Thermoelement kann dabei beispielsweise ein PT100 sein.

In einer Ausgestaltung wird in einem weiteren Verfahrensschritt nach Anbringen eines Thermoelements beispielsweise mittels Löten, Kleben oder Sintern eine Anschlusshülse an den Basiskörper angebracht, welche den zumindest teilweise freigelegten Bereich vollständig aufnimmt, wobei die Anschlusshülse mediendicht mit der Sondenhülse, insbesondere mit einer Laserrundnaht verbunden wird.

In einer Ausgestaltung weist die Sondenhülse in einem Kontaktbereich zur Verbindung mit der Anschlusshülse einen verjüngten Abschnitt auf, wobei die Anschlusshülse in einem weiteren Verfahrensschritt auf den verjüngten Abschnitt aufgeschoben wird.

In einer Ausgestaltung wird ist die Sondenhülse aus einem ersten Material umfassend einen Edelstahl gefertigt ist, und wobei der Sondenkern aus einem zweiten Material beispielsweise umfassend Silber oder Kupfer gefertigt ist,
wobei das zweite Material eine Wärmeleitfähigkeit von mindestens 100 W/(m*K), und insbesondere mindestens 200 W/(m*K) und bevorzugt mindestens 300 W/(m*K) aufweist,
wobei die Anschlusshülse insbesondere aus dem ersten Material gefertigt ist.

In einer Ausgestaltung wird ist nach Hochenergieumformung ein Durchmesser des Sondenkerns kleiner als 5 mm und insbesondere kleiner als 4 mm und bevorzugt kleiner als 3 mm und größer als 0.5 mm, und insbesondere größer als 1 mm und bevorzugt größer als 1.5 mm ist,
und wobei die Sondenhülse einen unverjüngten Außendurchmesser aufweist, welcher mindestens 0.1 mm und insbesondere mindestens 0.2 mm und bevorzugt mindestens 0.5 mm größer sowie höchstens 1.5 mm und insbesondere höchstens 1.2 mm und bevorzugt höchstens 1 mm größer ist als der Durchmesser des Sondenkerns.

Eine erfindungsgemäße Sonde für ein thermisches Durchflussmessgerät zur Messung des Massedurchflusses eines Mediums in einem Messrohr hergestellt nach einem Verfahren gemäß einem der vorigen Ansprüche umfasst:
Einen Basiskörper mit einem Sondenkern und einer Sondenhülse, welche den Sondenkern zumindest abschnittsweise umgreift und mit diesem stoffschlüssig verbunden ist;
einen Sondenkopf, welcher an einem ersten Ende des Basiskörpers mit der Sondenhülse mediendicht verbunden ist und das erste Ende verschließt;
ein Thermoelement, welches an einer Kontaktfläche des Sondenkerns beispielsweise durch Löten, Kleben oder Sintern in einem zumindest teilweise freigelegten Bereich befestigt ist;
eine Anschlusshülse, welche den zumindest teilweise freigelegten Bereich vollständig aufnimmt, wobei die Anschlusshülse mediendicht mit der Sondenhülse, insbesondere mit einer Laserrundnaht verbunden ist.

In einer Ausgestaltung weist der Sondenkern im zumindest teilweise freigelegten Bereich einen Vorsprung auf, welcher aus einer Grundfläche hervorsteht,
wobei die Kontaktfläche am Vorsprung angeordnet ist und bezüglich der Längsachse einen Innenwinkel kleiner als 30 Grad, und insbesondere kleiner als 20 Grad und bevorzugt kleiner als 10 Grad aufweist.

In einer Ausgestaltung weist der Vorsprung eine mit der Sondenhülse stoffschlüssig verbundene Rückseite auf, wobei die Sondenhülse im Bereich der Rückseite dazu eingerichtet ist, den Vorsprung mechanisch zu stabilisieren.

In einer Ausgestaltung ist das Thermoelement dazu eingerichtet, eine Temperatur des Mediums zu bestimmen und/oder das Medium zu beheizen.

Ein erfindungsgemäßes thermisches Durchflussmessgerät umfasst:
Ein Messrohr zum Führen eines Mediums;
Mindestens eine Sonde gemäß einem der Ansprüche 9 bis 12, wobei die Sonde im Messrohr angeordnet ist;
Eine elektronische Mess-/Betriebsschaltung zum Betreiben der mindestens einen Sonde und zum Bereitstellen von Durchflussmesswerten.

Im Folgenden wird die Erfindung anhand von Ausführungsbeispielen beschrieben.
Figs. 1 a) bis d) skizzieren verschiedene beispielhafte Stadien der Herstellung einer erfindungsgemäßen Sonde.
Figs. 2 a) bis c) skizzieren verschiedene Ausgestaltungen von einem Sondenkern mit einer Kontaktfläche zum Anbringen eines Thermoelements.
Fig. 3 skizziert eine schematische Frontansicht eines beispielhaften thermischen Durchflussmessgeräts.

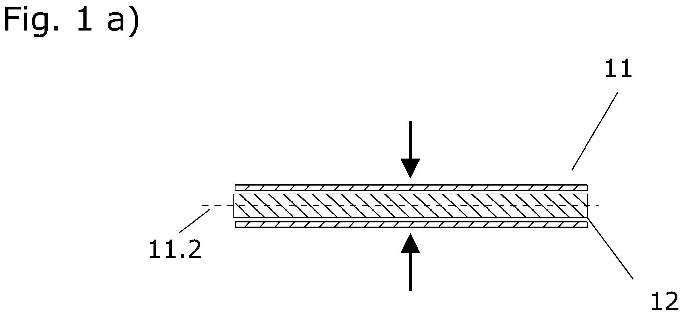

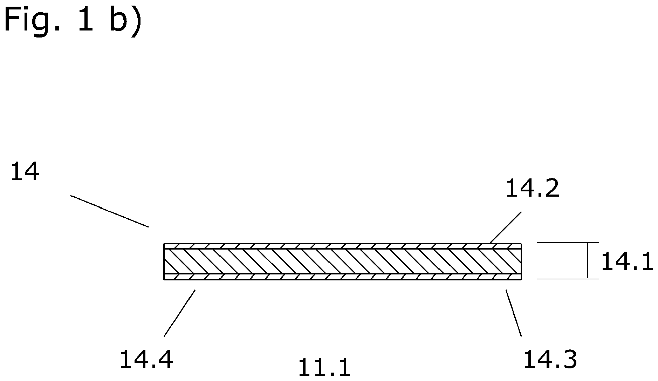

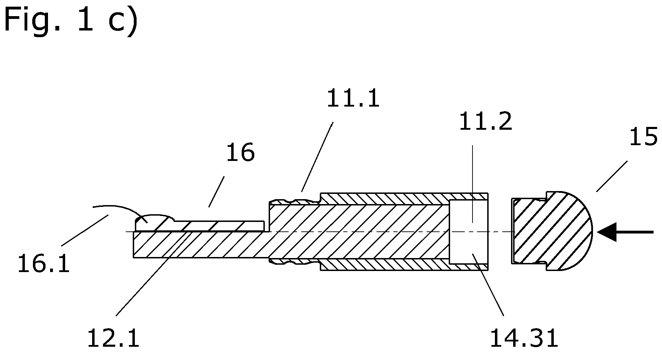

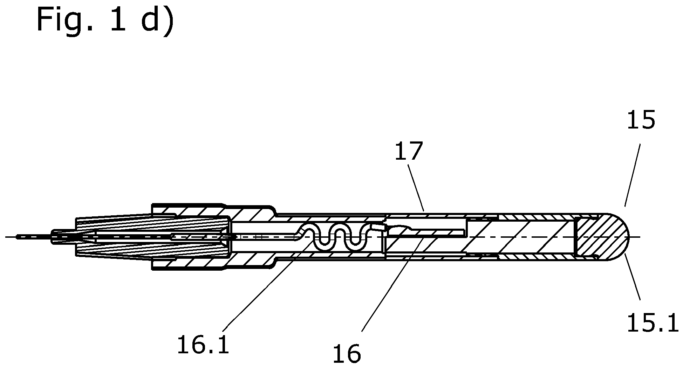

Fig. 1 a) skizziert einen Schnitt durch eine Sondenhülse 11 mit einer Längsachse 11.2, in welcher ein Sondenkern 12 lose angeordnet ist. In einem ersten Verfahrensschritt zur Herstellung einer erfindungsgemäßen Sonde wird die Sondenhülse bezüglich der Längsachse vollumfänglich radial in Richtung des Sondenkerns verformt, wobei eine stoffschlüssige Verbindung mit dem Sondenkern entsteht. Die Verformung wird dabei mittels Hochenergieumformung bewerkstelligt, wobei eine radiale Verformungsgeschwindigkeit Werte größer als 100 m/s und insbesondere größer als 200 m/s erreicht. Für die Hochenergieumformung kommen beispielsweise Explosionsumformung oder Magnetumformung in Frage. Explosionsumformung ist dabei von der Sprengplattierung abgeleitet, wobei ein Sprengstoff auf einer Außenseite der Sondenhülse platziert und gezündet wird. Bei Aufschlagen der Sondenhülse auf den Sondenkern führt die hohe Verformungsgeschwindigkeit zu einer grenzflächigen Durchmischung eines Sondenhülsenmaterials und eines Sondenkernmaterials. Auf diese Weise entsteht eine Stange mit einem in der Sondenhülse fixierten Sondenkern.

Fig. 1 b) skizziert einen Schnitt durch einen Basiskörper 14, welcher zur Sondenherstellung herangezogen wird. Der Basiskörper ist hierbei nach der Hochenergieumformung durch Abtrennung eines Stangenabschnitts von einer überbleibenden Stange gefertigt.

Der Basiskörper kann in einem weiteren Verfahrensschritt einem Zugverfahren unterworfen werden, mittels welchem eine Verringerung bzw. Anpassung eines Außendurchmessers 14.1 des Basiskörpers und eine Glättung einer Mantelfläche 14.2 des Basiskörpers erreicht wird. Dabei wird der Basiskörper durch eine Öffnung gezogen, welche einen geringfügig kleineren Durchmesser aufweist, als der Außendurchmesser des Basiskörpers. Dieser Schritt kann mehrfach mit jeweils kleinerer Öffnung wiederholt werden. Der Basiskörper weist ein erstes Ende 14.3 und ein zweites Ende 14.4 auf.

Fig. 1 c) skizziert ein weiteres Stadium der Herstellung einer erfindungsgemäßen Sonde, wobei in einem weiteren Verfahrensschritt in einem Endbereich 14.31 des ersten Endes der Sondenkern entfernt wird, wobei ein Sondenkopf 15 in den Endbereich eingeführt und anschließend an der Sondenhülse insbesondere durch Laserschweißen befestigt wird. Auf diese Weise ist das erste Ende des Basiskörpers mediendicht verschlossen. Eine Außenseite 15.1 des Sondenkopfs weist beispielsweise wie hier dargestellt eine abgerundete Form wie beispielsweise eine Halbkugel- oder Halbellipsoidform auf, was vorteilhaft für einen Strömungswiderstand der Sonde ist.

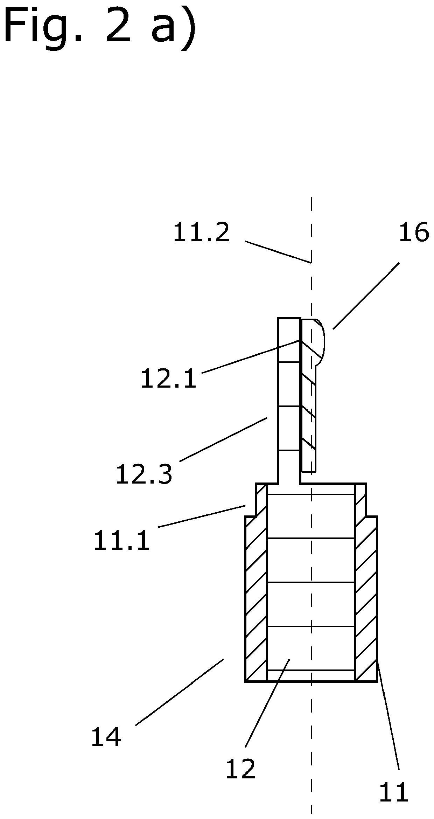

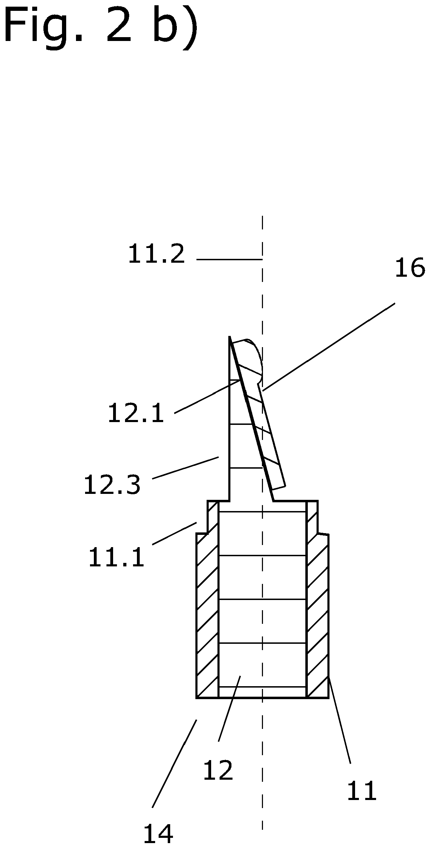

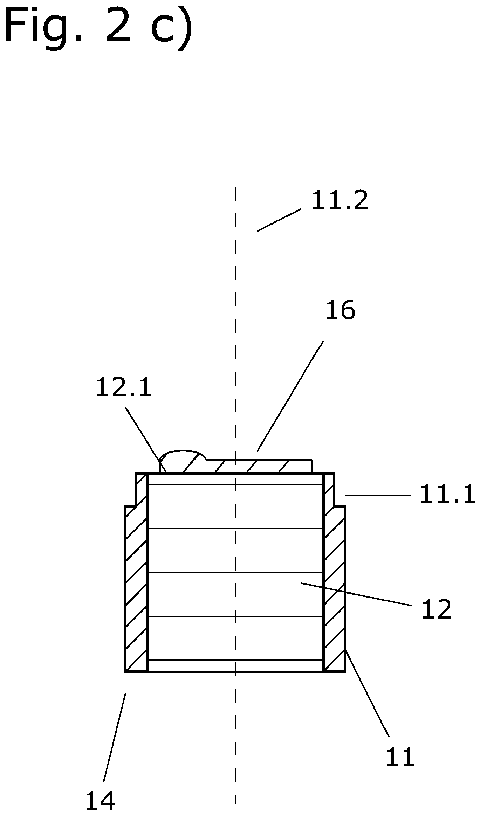

In einem weiteren Verfahrensschritt wird der Sondenkern an einem zweiten Ende des Basiskörpers freigelegt und eine Kontaktfläche zum Anbringen eines Thermoelements 16 am Sondenkern herausgearbeitet wird. Die Kontaktfläche kann wie hier dargestellt parallel zur Längsachse der Sondenhülse verlaufen. Weitere beispielhafte Darstellungen zur Kontaktfläche finden sich in Fig. 2. Das Anbringen eines Thermoelements 16 wird beispielsweise mittels Löten, Kleben oder Sintern bewerkstelligt.

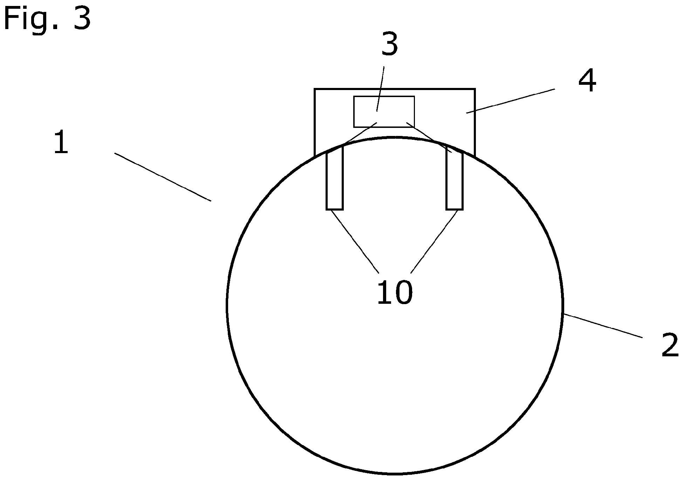

Das Thermoelement 16 weist dabei elektrische Anschlussleitungen 16.1 auf, mittels welchen das Thermoelement an eine elektronische Mess-/Betriebsschaltung 3, siehe Fig. 3, anschließbar ist.

Die Sondenhülse 11 kann in einem Kontaktbereich 11.1 zum Anbringen einer Anschlusshülse 17, siehe Fig. 1 d), wie hier dargestellt eine Verjüngung aufweisen, so dass ein Anschlag für die Anschlusshülse ausgebildet wird.

Die Reihenfolge der hier beschriebenen Verfahrensschritte kann auch geändert werden.

Fig. 1 d) skizziert ein Endstadium der Herstellung einer erfindungsgemäßen Sonde, wobei nach Anbringen des Thermoelements 12 an den Sondenkern 12 eine Anschlusshülse 17 über den freigelegten Bereich des Basiskörpers geschoben, so dass der freigelegte Bereich vollständig angenommen ist. Nach Befestigen der Anschlusshülse beispielsweise mittels einer Laserrundnaht ist die Anschlusshülse mediendicht mit der Sondenhülse verbunden.

Die in Figs. 1a) bis d) gezeigte Sondenhülse 11 ist aus einem ersten Material umfassend einen Edelstahl gefertigt, wobei der Sondenkern 12 aus einem zweiten Material beispielsweise umfassend Silber oder Kupfer gefertigt ist, wobei das zweite Material eine Wärmeleitfähigkeit von mindestens 100 W/(m*K), und insbesondere mindestens 200 W/(m*K) und bevorzugt mindestens 300 W/(m*K) aufweist. Die Anschlusshülse 17 ist insbesondere aus dem ersten Material gefertigt.

Da Edelstahl eine geringere Wärmeleitfähigkeit als das zweite Material aufweist, führt eine Temperaturänderung der Sondenhülse, welche beispielsweise durch eine Änderung der Medientemperatur verursacht wurde, zu einer gleichmäßigen, bzw. fast konstanten Temperaturverteilung im Sensorkern und somit beim Thermoelement.

Figs. 2 a) bis c) skizzieren Querschnitte durch beispielhafte erfindungsgemäße Basiskörper 14 mit Sondenkern 12 und Sondenhülse 11. Bei Figs. 2 a) und b) sind in einem freigelegten Bereich jeweils ein Vorsprung 12.3 mit einer Kontaktfläche aus dem Sondenkern herausgearbeitet, an welcher Kontaktfläche ein Thermoelement 16 angebracht ist. Bei Fig. 2 c) ist ein Durchmesser des Basiskörpers groß genug um ein Thermoelement senkrecht zur Längsachse 11.2 der Sondenhülse anzuordnen. Die in Figs, 2 a) und b) gezeigten Ausführungsbeispiele erlauben es Sonden mit geringem Durchmesser zu fertigen. Auf diese Art und Weise kann eine thermische Masse der Sonde und somit ein Ansprechverhalten optimiert werden.

Fig. 3 zeigt eine schematische Frontansicht auf ein beispielhaftes thermisches Durchflussmessgerät 1 mit einem Messrohr 2, zwei erfindungsgemäße Sonden 10, welche im Lumen des Messrohrs 2 angeordnet sind, und einem Gehäuse 4, welches eine elektronische Betriebsschaltung 3 aufweist. Die elektronische Betriebsschaltung ist dazu eingerichtet, die Sonden 10 zu betreiben und Durchflussmesswerte bereitzustellen.

Um den Massedurchfluss eines Mediums durch das Messrohr 2 zu messen, wird beispielsweise eine erste Sonde im durch das Messrohr 40 strömenden Medium derart beheizt, dass eine Temperaturdifferenz gegenüber der Medientemperatur konstant bleibt. Eine zweite Sonde kann dabei zur Temperaturmessung des Mediums verwendet werden. Unter Voraussetzung gleichbleibender Medieneigenschaften wie Dichte oder Zusammensetzung lässt sich über den zum Halten der Temperatur notwendigen Heizstrom auf den Massedurchfluss des Mediums schließen. Das hier skizzierte thermische Durchflussmessgerät ist beispielhaft und hat rein darstellerischen Charakter. Der Fachmann wird sich eine Anzahl von Sonden gemäß seinen Anforderungen zusammenstellen und diese im Messrohr in einer gewünschten Weise anordnen. Verfahren zum Betreiben solcher Sonden sind Stand der Technik.

### Bezugszeichenliste

- 1: thermisches Durchflussmessgerät
- 2: Messrohr
- 3: elektronische Mess-/Betriebsschaltung
- 4: Gehäuse
- 10: Sonde
- 11: Sondenhülse
- 11.1: Kontaktbereich
- 11.2: Längsachse
- 12: Sondenkern
- 12.1: Kontaktfläche
- 12.2: Durchmesser Sondenkern
- 12.3: Vorsprung
- 13: Stange / Stangenabschnitt
- 14: Basiskörper
- 14.1: Außendurchmesser des Basiskörpers
- 14.2: Mantelfläche
- 14.3: erstes Ende des Basiskörpers
- 14.31: Endbereich
- 14.4: zweites Ende des Basiskörpers
- 15: Sondenkopf
- 15.1: Außenseite des Sondenkopfs
- 16: Thermoelement
- 16.1: elektrische Anschlussleitungen
- 17: Anschlusshülse

## Patentansprüche

1. Verfahren zur Herstellung einer Sonde (10) für ein thermisches Durchflussmessgerät (1) zur Messung des Massedurchflusses eines Mediums in einem Messrohr (2),
wobei eine Sondenhülse (11) mit einer Längsachse (11.2) und ein in der Sondenhülse lose angeordneter Sondenkern (12) bereitgestellt wird,
wobei in mindestens einem ersten Verfahrensschritt mittels Hochenergieumformung die Sondenhülse bezüglich der Längsachse vollumfänglich radial in Richtung des Sondenkerns verformt wird, und somit eine Stange gefertigt wird,
wobei die Stange einen Basiskörper (14) darstellt, oder wobei ein Basiskörper (14) von der Stange abgetrennt wird, wobei der Basiskörper zur Sondenfertigung herangezogen wird,
wobei eine radiale Verformungsgeschwindigkeit Werte größer als 100 m/s und insbesondere größer als 200 m/s erreicht, wobei die Hochenergieumformung mittels Explosionsumformung durch Platzieren von Sprengstoff auf einer Außenseite der Sondenhülse oder einer Magnetumformung bewerkstelligt wird,
wobei eine stoffschlüssige Verbindung zwischen Sondenhülse und Sondenkern entsteht.

2. Verfahren nach Anspruch 1,
wobei der Basiskörper in einem weiteren Verfahrensschritt einem Zugverfahren unterworfen wird, mittels welchem eine Verringerung eines Außendurchmessers (14.1) des Basiskörpers und eine Glättung einer Mantelfläche (14.2) des Basiskörpers erreicht wird.

3. Verfahren nach Anspruch 1 oder 2,
wobei in einem weiteren Verfahrensschritt ein erstes Ende (14.3) des Basiskörpers mediendicht verschlossen wird,
wobei das Verschließen des ersten Endes ein Entfernen des Sondenkerns in einem Endbereich (14.31) umfasst, wobei ein Sondenkopf (15) in den Endbereich eingeführt und an der Sondenhülse insbesondere durch Laserschweißen befestigt wird,
wobei eine Außenseite (15.1) des Sondenkopfs insbesondere eine abgerundete Form wie beispielsweise eine Halbkugel- oder Halbellipsoidform aufweist.

4. Verfahren nach einem der vorigen Ansprüche,
wobei in einem weiteren Verfahrensschritt der Sondenkern (12) auf einer einem zweiten Ende (14.4) des Basiskörpers zugewandten Seite abschnittsweise zumindest teilweise freigelegt wird,
wobei am Sondenkern eine Kontaktfläche (12.1) zum Anbringen eines Thermoelements an den Sondenkern herausgearbeitet wird,
wobei die Kontaktfläche insbesondere einen Innenwinkel zur Längsachse aufweist, welcher Innenwinkel kleiner als 30 Grad, und insbesondere kleiner als 20 Grad und bevorzugt kleiner als 10 Grad ist.

5. Verfahren nach Anspruch 4,
wobei in einem weiteren Verfahrensschritt nach Anbringen eines Thermoelements (16) beispielsweise mittels Löten, Kleben oder Sintern eine Anschlusshülse (17) an den Basiskörper angebracht wird, welche den zumindest teilweise freigelegten Bereich vollständig aufnimmt, wobei die Anschlusshülse mediendicht mit der Sondenhülse, insbesondere mit einer Laserrundnaht verbunden wird.

6. Verfahren nach Anspruch 5,
wobei die Sondenhülse in einem Kontaktbereich (11.1) zur Verbindung mit der Anschlusshülse einen verjüngten Abschnitt aufweist, wobei die Anschlusshülse in einem weiteren Verfahrensschritt auf den verjüngten Abschnitt aufgeschoben wird.

7. Verfahren nach einem der vorigen Ansprüche,
wobei die Sondenhülse (11) aus einem ersten Material umfassend einen Edelstahl gefertigt ist, und wobei der Sondenkern (12) aus einem zweiten Material beispielsweise umfassend Silber oder Kupfer gefertigt ist,
wobei das zweite Material eine Wärmeleitfähigkeit von mindestens 100 W/(m*K), und insbesondere mindestens 200 W/(m*K) und bevorzugt mindestens 300 W/(m*K) aufweist,
wobei die Anschlusshülse (17) insbesondere aus dem ersten Material gefertigt ist.

8. Verfahren nach einem der vorigen Ansprüche,
wobei nach Hochenergieumformung ein Durchmesser des Sondenkerns (12.2) kleiner als 5 mm und insbesondere kleiner als 4 mm und bevorzugt kleiner als 3 mm und größer als 0.5 mm, und insbesondere größer als 1 mm und bevorzugt größer als 1.5 mm ist,
und wobei die Sondenhülse einen unverjüngten Außendurchmesser aufweist, welcher mindestens 0.1 mm und insbesondere mindestens 0.2 mm und bevorzugt mindestens 0.5 mm größer sowie höchstens 1.5 mm und insbesondere höchstens 1.2 mm und bevorzugt höchstens 1 mm größer ist als der Durchmesser des Sondenkerns.

9. Sonde (10) für ein thermisches Durchflussmessgerät (1) zur Messung des Massedurchflusses eines Mediums in einem Messrohr (2) hergestellt nach einem Verfahren gemäß einem der vorigen Ansprüche umfassend:
Einen Basiskörper (14) mit einem Sondenkern (12) und einer Sondenhülse (11), welche den Sondenkern zumindest abschnittsweise umgreift und mit diesem stoffschlüssig verbunden ist;
einen Sondenkopf (15), welcher an einem ersten Ende des Basiskörpers mit der Sondenhülse mediendicht verbunden ist und das erste Ende verschließt;
ein Thermoelement (16), welches an einer Kontaktfläche des Sondenkerns beispielsweise durch Löten, Kleben oder Sintern in einem zumindest teilweise freigelegten Bereich befestigt ist, wobei das Thermoelement insbesondere elektrische Anschlussleitungen (16.1) aufweist, mittels welchen das Thermoelement betrieben werden kann;
eine Anschlusshülse (17), welche den zumindest teilweise freigelegten Bereich vollständig aufnimmt, wobei die Anschlusshülse mediendicht mit der Sondenhülse, insbesondere mit einer Laserrundnaht verbunden ist.

10. Sonde nach Anspruch 9,
wobei der Sondenkern im zumindest teilweise freigelegten Bereich insbesondere einen Vorsprung (12.3) aufweist welcher aus einer Grundfläche hervorsteht,
wobei die Kontaktfläche am Vorsprung angeordnet ist und bezüglich der Längsachse einen Innenwinkel kleiner als 30 Grad, und insbesondere kleiner als 20 Grad und bevorzugt kleiner als 10 Grad aufweist.

11. Sonde nach Anspruch 10,
wobei der Vorsprung eine mit der Sondenhülse stoffschlüssig verbundene Rückseite aufweist,
wobei die Sondenhülse im Bereich der Rückseite dazu eingerichtet ist, den Vorsprung mechanisch zu stabilisieren.

12. Sonde nach einem der Ansprüche 9 bis 11,
wobei das Thermoelement dazu eingerichtet ist, eine Temperatur des Mediums zu bestimmen und/oder das Medium zu beheizen.

13. Thermisches Durchflussmessgerät (1) umfassend:
Ein Messrohr (2) zum Führen eines Mediums;
Mindestens eine Sonde (10) gemäß einem der Ansprüche 9 bis 12, wobei die Sonde im Messrohr angeordnet ist;
Eine elektronische Mess-/Betriebsschaltung (3) zum Betreiben der mindestens einen Sonde und zum Bereitstellen von Durchflussmesswerten,
Ein Gehäuse (4) zum Behausen der elektronischen Mess-/Betriebsschaltung.

## Claims

1. A method for manufacturing a probe (10) for a thermal flowmeter (1) to measure the mass flow of a medium in a measuring tube (2),
wherein a probe sleeve (11) is provided with a longitudinal axis (11.2) and a probe core (12) loosely arranged in the probe sleeve,
wherein in at least one first process step, the probe sleeve is fully radially formed relative to the longitudinal axis in the direction of the probe core by means of high energy rate forming, producing a rod,
wherein the rod represents a base body (14), or wherein a base body (14) is separated from the rod, wherein the base body is used for special manufacture, wherein a radial forming speed reaches values of greater than 100 m/s and in particular greater than 200 m/s, wherein the high energy rate forming is effected by means of explosive forming by placing an explosive on an outer side of the probe sleeve or by means of magnetic forming,
wherein a material bond is produced between the probe sleeve and the probe core.

2. The method as claimed in claim 1,
wherein in a further process step, the base body undergoes a tensile process which serves to reduce an external diameter (14.1) of the base body and to smooth a lateral surface (14.2) of the base body.

3. The method as claimed in claim 1 or 2,
wherein in a further process step, a first end (14.3) of the base body is sealed against media,
wherein the sealing of the first end comprises removal of the probe core in an end area (14.31), wherein a probe head (15) is inserted into the end area and is attached to the probe sleeve, in particular by laser welding,
wherein an outer side (15.1) of the probe head has in particular a rounded shape, such as a hemispherical or semi-ellipsoidal shape.

4. The method as claimed in one of the preceding claims,
wherein in a further process step, some sections of the probe core (12) are at least partly exposed on a side facing toward a second end (14.4) of the base body,
wherein a contact surface (12.1) for attaching a thermocouple to the probe core is provided on the probe core,
wherein the contact surface in particular has an internal angle relative to the longitudinal axis, said internal angle being less than 30 degrees, and in particular less than 20 degrees, and preferably less than 10 degrees.

5. The method as claimed in claim 4,
wherein in a further process step, after a thermocouple (16) is attached, for example by means of soldering, adhesion or sintering, a connecting sleeve (17) is fitted to the base body, said connecting sleeve fully housing the at least partly exposed area,
wherein the connecting sleeve has a media-tight connection to the probe sleeve, in particular using a laser girth weld.

6. The method as claimed in claim 5,
wherein the probe sleeve has tapered section in a contact area (11.1) for connection to the connecting sleeve, wherein the connecting sleeve is pushed onto the tapered section in a further process step.

7. The method as claimed in one of the preceding claims,
wherein the probe sleeve (11) is made from a first material comprising a stainless steel, and wherein the probe core (12) is made from a second material comprising silver or copper, for example,
wherein the second material has a thermal conductivity of at least 100 W/(m*K), and in particular at least 200 W/(m^{∗}K), and preferably at least 300 W/(m*K),
wherein the connecting sleeve (17) is in particular made from the first material.

8. The method as claimed in one of the preceding claims,
wherein after high energy rate forming, a diameter of the probe core (12.2) is smaller than 5 mm and in particular smaller than 4 mm, and preferably smaller than 3 mm and larger than 0.5 mm, and in particular larger than 1 mm, and preferably larger than 1.5 mm,
and wherein the probe sleeve has a tapered external diameter which is at least 0.1 mm and in particular at least 0.2 mm and preferably at least 0.5 mm larger than and at most 1.5 mm and in particular at most 1.2 mm and preferably at most 1 mm larger than the diameter of the probe core.

9. A probe (10) for a thermal flowmeter (1) for measuring the mass flow of a medium in a measuring tube (2) manufactured according to a method as claimed in one of the preceding claims, comprising:
A base body (14) with a probe core (12) and a probe sleeve (11) which encloses at least some sections of the probe core and is materially bonded thereto; A probe head (15) which has a media-tight connection to the probe sleeve at a first end of the base body and which seals the first end;
A thermocouple (16) which is attached to a contact surface of the probe core, for example by soldering, adhesion or sintering in an at least partly exposed area, wherein the thermocouple has in particular electrical connecting lines (16.1) which can be used to operate the thermocouple;
A connecting sleeve (17) which fully houses the at least partly exposed area, wherein the connecting sleeve has a media-tight connection to the probe sleeve, in particular using a laser girth weld.

10. The probe as claimed in claim 9,
wherein in the at least partly exposed area, the probe core has in particular a projecting part (12.3) which protrudes from a base surface,
wherein the contact surface is arranged on the projecting part and has an internal angle of less than 30 degrees relative to the longitudinal axis, and in particular less than 20 degrees, and preferably less than 10 degrees.

11. The probe as claimed in claim 10,
wherein the projecting part has a rear side which is materially bonded to the probe sleeve,
wherein the probe sleeve in the area of the rear side is configured to mechanically stabilize the projecting part.

12. The probe as claimed in one of claims 9 to 11,
wherein the thermocouple is configured to determine a temperature of the medium and/or to heat the medium.

13. A thermal flowmeter (1), comprising: A measuring tube (2) for guiding a medium;
At least one probe (10) as claimed in one of claims 9 to 12, wherein the probe is arranged in the measuring tube;
An electronic measuring/operating circuit (3) for operating the at least one probe and for providing measured flow values,
A housing (4) to house the electronic measuring/operating circuit.

## Revendications

1. Procédé destiné à la fabrication d'une sonde (10) pour un débitmètre thermique (1) en vue de la mesure du débit massique d'un produit dans un tube de mesure (2),
une douille de sonde (11), laquelle présente un axe longitudinal (11.2) et un noyau de sonde (12) disposé de manière lâche dans la douille de sonde, étant mise à disposition,
la douille de sonde étant, dans au moins une première étape de procédé, entièrement déformée radialement en direction du noyau de sonde par rapport à l'axe longitudinal au moyen d'une déformation à haute énergie, et une tige étant ainsi fabriquée,
la tige représentant un corps de base (14), ou un corps de base (14) étant séparé de la tige, le corps de base étant utilisé pour la fabrication de la sonde,
une vitesse de déformation radiale atteignant des valeurs supérieures à 100 m/s et notamment supérieures à 200 m/s, la déformation à haute énergie étant réalisée au moyen d'une déformation par explosion en plaçant un explosif sur un côté extérieur de la douille de sonde ou d'une déformation magnétique,
une liaison par matière étant créée entre la douille de sonde et le noyau de sonde.

2. Procédé selon la revendication 1,
pour lequel le corps de base est soumis, dans une autre étape du procédé, à un procédé de traction au moyen duquel on obtient une réduction d'un diamètre extérieur (14.1) du corps de base et un lissage d'une surface d'enveloppe (14.2) du corps de base.

3. Procédé selon la revendication 1 ou 2,
pour lequel, dans une autre étape du procédé, une première extrémité (14.3) du corps de base est fermée de manière étanche au produit,
la fermeture de la première extrémité comprenant un retrait du noyau de sonde dans une zone d'extrémité (14.31), une tête de sonde (15) étant introduite dans la zone d'extrémité et fixée à la douille de sonde, notamment par soudage au laser, une face extérieure (15.1) de la tête de sonde présentant notamment une forme arrondie, comme par exemple une forme hémisphérique ou semi-ellipsoïdale.

4. Procédé selon l'une des revendications précédentes,
pour lequel, dans une autre étape du procédé, le noyau de sonde (12) est dégagé au moins partiellement par sections sur un côté tourné vers une deuxième extrémité (14.4) du corps de base,
une surface de contact (12.1) pour l'application d'un thermocouple sur le noyau de sonde étant réalisée sur le noyau de sonde,
la surface de contact présentant notamment un angle intérieur par rapport à l'axe longitudinal, lequel angle intérieur est inférieur à 30 degrés, et notamment inférieur à 20 degrés et de préférence inférieur à 10 degrés.

5. Procédé selon la revendication 4,
pour lequel, dans une autre étape du procédé, après avoir appliqué un thermocouple (16), par exemple au moyen d'un brasage, d'un collage ou d'un frittage, on applique sur le corps de base une douille de raccordement (17), laquelle reçoit complètement la zone au moins partiellement dégagée, ladite douille de raccordement étant reliée à la douille de sonde de manière étanche au produit, notamment par une soudure circulaire au laser.

6. Procédé selon la revendication 5,
pour lequel la douille de sonde présente une section rétrécie dans une zone de contact (11.1) pour la liaison avec la douille de raccordement, la douille de raccordement étant enfilée sur la section rétrécie dans une autre étape du procédé.

7. Procédé selon l'une des revendications précédentes,
pour lequel la douille de sonde (11) est fabriquée à partir d'un premier matériau comprenant un acier inoxydable, et
pour lequel le noyau de sonde (12) est fabriqué à partir d'un deuxième matériau comprenant par exemple de l'argent ou du cuivre,
le deuxième matériau présentant une conductivité thermique d'au moins 100 W/(m*K), et notamment d'au moins 200 W/(m*K) et de préférence d'au moins 300 W/(m*K),
la douille de raccordement (17) étant notamment fabriquée à partir du premier matériau.

8. Procédé selon l'une des revendications précédentes,
pour lequel un diamètre du noyau de sonde (12.2) est, après déformation à haute énergie, inférieur à 5 mm et notamment inférieur à 4 mm et de préférence inférieur à 3 mm et supérieur à 0,5 mm, et notamment supérieur à 1 mm et de préférence supérieur à 1,5 mm,
et pour lequel la douille de sonde présente un diamètre extérieur non rétréci qui est supérieur d'au moins 0,1 mm et notamment d'au moins 0,2 mm et de préférence d'au moins 0,5 mm ainsi que d'au plus 1,5 mm et notamment d'au plus 1,2 mm et de préférence d'au plus 1 mm au diamètre du noyau de sonde.

9. Sonde (10) pour un débitmètre thermique (1), laquelle sonde est destinée à la mesure du débit massique d'un produit dans un tube de mesure (2) et laquelle sonde est fabriquée d'après un procédé selon les revendications précédentes, laquelle sonde comprend :
un corps de base (14) avec un noyau de sonde (12) et une douille de sonde (11), laquelle douille entoure le noyau de sonde au moins par sections et est reliée par une liaison de matière audit noyau ;
une tête de sonde (15), laquelle est reliée par une première extrémité du corps de base à la douille de sonde de manière étanche au produit et qui ferme la première extrémité ;
un thermocouple (16), lequel est fixé sur une surface de contact du noyau de sonde, par exemple par brasage, collage ou frittage, dans une zone au moins partiellement dégagée, le thermocouple comportant notamment des lignes de raccordement électrique (16.1), au moyen desquelles le thermocouple peut être utilisé ;
une douille de raccordement (17), laquelle reçoit complètement la zone au moins partiellement dégagée, la douille de raccordement étant reliée de manière étanche au produit à la douille de sonde, notamment par une soudure circulaire au laser.

10. Sonde selon la revendication 9,
pour lequel le noyau de sonde présente dans la zone au moins partiellement dégagée notamment une saillie (12.3) qui dépasse d'une surface de base,
la surface de contact étant disposée sur la saillie et présentant par rapport à l'axe longitudinal un angle intérieur inférieur à 30 degrés, et notamment inférieur à 20 degrés et de préférence inférieur à 10 degrés.

11. Sonde selon la revendication 10,
pour lequel la saillie présente une face arrière reliée à la douille de sonde par une liaison de matière, la douille de sonde étant conçue dans la zone de la face arrière pour stabiliser mécaniquement la saillie.

12. Sonde selon l'une des revendications 9 à 11,
pour lequel le thermocouple est conçu pour déterminer une température du produit et/ou pour chauffer le produit.

13. Débitmètre thermique (1) comprenant :
un tube de mesure (2) destiné à guider un produit ;
au moins une sonde (10) selon l'une des revendications 9 à 12, la sonde étant disposée dans le tube de mesure ;
un circuit électronique de mesure/fonctionnement (3) pour faire fonctionner l'au moins une sonde et pour fournir des valeurs mesurées de débit,
un boîtier (4) pour loger le circuit électronique de mesure/fonctionnement.
